# EUROPÄISCHE PATENTANMELDUNG

(11) **EP 4 796 299 A1**
(43) Veröffentlichungstag der Anmeldung: **26.08.2026**
(21) Anmeldenummer: 25163246.9
(22) Anmeldetag: 12.03.2025
(51) Int. Cl.: B29C 65/18, B29C 65/30, B29C 65/00, B29L 31/00

(54) **VERFAHREN ZUR ÜBERWACHUNG EINES SCHWEISSVORGANGS FÜR KUNSTSTOFFFOLIEN UND SCHWEISSEINRICHTUNG ZUM VERSCHWEISSEN VON KUNSTSTOFFFOLIEN**

(30) Priorität: 24.02.2025 DE 102025106788
(71) Anmelder: ROPEX Industrie-Elektronik GmbH, 74321 Bietigheim-Bissingen (DE)
(72) Erfinder: Schuller, Manuel, 74321 Bietigheim-Bissingen (DE)
(74) Vertreter: Patentanwälte Magenbauer & Kollegen Partnerschaft mbB

(57) **Zusammenfassung**

Die Erfindung betrifft ein Verfahren zur Überwachung eines Schweißvorgangs für Kunststofffolien (2, 3) mit den Schritten: Anordnen eines Überlappungsbereichs (11), der von einer ersten Kunststofffolie (2) und von einer zweiten Kunststofffolie (3) gebildet wird, in einer Schweißzone (10), die von einer ersten Schweißschiene (4) und von einem gegenüberliegend zur ersten Schweißschiene (4) angeordneten Gegenhalter (5) begrenzt wird, Ermitteln einer vom Überlappungsbereich (11) bestimmten Kapazität zwischen einer ersten Elektrode (28; 68; 78), die in der Schweißzone (10) angeordnet ist und einer zweiten Elektrode (29; 69; 79), die abseits der Schweißzone (10) angeordnet ist, vor einer Erhitzung der Schweißzone (10) und/oder während der Erhitzung der Schweißzone (10) und/oder nach der Erhitzung der Schweißzone (10).

## Beschreibung

Die Erfindung betrifft ein Verfahren zur Überwachung eines Schweißvorgangs für Kunststofffolien und eine Schweißeinrichtung zum Verschweißen von Kunststofffolien.

Aus dem Stand der Technik sind unterschiedliche Verfahren zum Verschweißen von Kunststofffolien bekannt, wobei häufig eine linienförmige, insbesondere gerade, Schweißnaht zwischen einer ersten Kunststofffolie und einer zweiten Kunststofffolie hergestellt wird, um beispielsweise eine als Schlauchbeutel ausgebildete Verpackung zu verschließen. Für die Durchführung des Schweißverfahrens ist vorgesehen, eine lokale Wärmezufuhr längs der vorgesehenen Schweißnaht mit einem geeigneten Schweißwerkzeug durchzuführen. Ein solches Schweißwerkzeug umfasst beispielsweise ein als elektrischer Widerstand ausgebildetes Heizband, das an einer Oberfläche einer formstabilen Schweißschiene aus Metall festgelegt ist und das von der Anmelderin unter der Produktbezeichnung RESISTRON vertrieben wird. Alternativ werden Schweißwerkzeuge eingesetzt, die eine Schweißschiene aus Metall mit einer in Dickschichttechnik hergestellten, elektrisch leitfähigen Schweißleitung aufweisen und die von der Anmelderin unter der Produktbezeichnung CIRUS vertrieben werden. Die Bereitstellung der zur Durchführung des Schweißvorgangs notwendigen elektrischen Energie erfolgt durch einen spezifisch abgestimmten Schweißtransformator in gesteuerter Weise (open loop) oder geregelter Weise (closed loop).

Die EP 4 137 296 A1 offenbart ein Verfahren zur Überwachung eines Schweißvorgangs für Kunststofffolien mit den Schritten: Anordnen eines Überlappungsbereichs, der von einer ersten Kunststofffolie und von einer zweiten Kunststofffolie gebildet wird, in einer Schweißzone, die von einer ersten Schweißschiene und von einer zweiten Schweißschiene begrenzt wird, Ermitteln einer Kapazität und/oder einer Impedanz für den Überlappungsbereich vor einer Erhitzung der Schweißzone und/oder während der Erhitzung der Schweißzone und/oder nach der Erhitzung der Schweißzone und Auswertung der ermittelten Kapazität und/oder Impedanz in einer Messeinrichtung.

Die Aufgabe der Erfindung besteht darin, ein Verfahren zur Überwachung eines Schweißvorgangs für Kunststofffolien und eine Schweißeinrichtung zum Verschweißen von Kunststofffolien bereitzustellen, mit denen eine verbesserte Überwachung des Schweißvorgangs ermöglicht wird.

Diese Aufgabe wird für das Verfahren zur Überwachung des Schweißvorgangs mit den folgenden Schritten gelöst: Anordnen eines Überlappungsbereichs, der von einer ersten Kunststofffolie und von einer zweiten Kunststofffolie gebildet wird, in einer Schweißzone, die von einer ersten Schweißschiene und von einer zweiten Schweißschiene begrenzt wird, Ermitteln einer vom Überlappungsbereich bestimmten Kapazität zwischen einer ersten Elektrode, die in der Schweißzone angeordnet ist und einer zweiten Elektrode, die abseits der Schweißzone angeordnet ist vor einer Erhitzung der Schweißzone und/oder während der Erhitzung der Schweißzone und/oder nach der Erhitzung der Schweißzone. Vorzugsweise erfolgt die Ermittlung und Auswertung der ermittelten Kapazität in einer Messeinrichtung, die mit der ersten Elektrode und mit der zweiten Elektrode elektrisch verbunden ist.

Bei der ersten Kunststofffolie und der zweiten Kunststofffolie, die im Überlappungsbereich aufeinander aufliegen und im Zuge des Schweißvorgangs stoffschlüssig miteinander verbunden werden sollen, kann es sich um Abschnitte der gleichen Kunststofffolie handeln, alternativ handelt es sich um zwei separate Kunststofffolien. Üblicherweise ist der Überlappungsbereich benachbart zu einer Kante der jeweiligen Kunststofffolie angeordnet, alternativ ist der Überlappungsbereich in einem zentralen Abschnitt der jeweiligen Kunststofffolie angeordnet. Typischerweise umfasst der Überlappungsbereich die erste Kunststofffolie und die zweite Kunststofffolie, es kann jedoch auch vorgesehen werden, dass zusätzlich eine dritte oder weitere Kunststofffolien im Überlappungsbereich angeordnet werden, um im Zuge der Schweißverfahren stoffschlüssig miteinander verbunden zu werden.

Durch die Verwendung einer ersten Elektrode, die in der Schweißzone angeordnet ist, sowie einer zweiten Elektrode, die abseits der Schweißzone angeordnet ist, kann eine Kapazität ermittelt werden, die nicht ausschließlich von dem in der Schweißzone angeordneten Überlappungsbereich bestimmt wird.

Die erste Schweißschiene und der Gegenhalter sind gegenüberliegend zueinander angeordnet und können mit Hilfe eines Aktors aneinander angenähert bzw. voneinander entfernt werden, um einen größenvariablen Schweißspalt auszubilden, der auch als Schweißzone bezeichnet wird. In diese Schweißzone wird der Überlappungsbereich eingebracht, anschließend erfolgt eine Annäherung der ersten Schweißschiene an den Gegenhalter, um einen zur Durchführung des Schweißvorgangs ausreichenden Druck auf den Überlappungsbereich ausüben zu können. In einem nachfolgenden Schritt erfolgt die Erhitzung des Überlappungsbereichs, wobei hier zusätzlich eine Aufrechterhaltung des Drucks oder eine Vergrößerung des Drucks vorgesehen werden kann, der von der ersten Schweißschiene und dem Gegenhalter auf den Überlappungsbereich ausgeübt wird. Die Schweißzone ist also diejenige Zone, in der während der Durchführung des Schweißvorgangs eine Kraftübertragung von der ersten Schweißschiene auf den Überlappungsbereich und vom Überlappungsbereich auf den Gegenhalter erfolgt und in der im Zuge des Schweißvorgangs eine stoffschlüssige Verbindung zwischen den beiden Kunststofffolien erzeugt wird.

Um eine Kontrolle des Schweißvorgangs zu ermöglichen, ist vorgesehen, eine Kapazitätsermittlung durchzuführen. Hierzu wird mit Hilfe der ersten Elektrode und der zweiten Elektrode in der Messeinrichtung eine Kapazität ermittelt, die von den Materialien bestimmt wird, die zwischen der ersten Elektrode und der zweiten Elektrode aufgenommen sind. Sofern die erste Elektrode und die zweite Elektrode an einer Außenoberfläche der ersten Kunststofffolie, die zusammen mit der zweiten Kunststofffolie den Überlappungsbereich bestimmt, anliegen, wird die Kapazität zwischen den beiden Elektroden zumindest im Wesentlichen von der ersten Kunststofffolie bestimmt. Ist hingegen vorgesehen, dass die erste Elektrode an der Außenoberfläche der ersten Kunststofffolie anliegt und dass die zweite Elektrode an der Außenoberfläche der zweiten Kunststofffolie anliegt, so wird die Kapazität zwischen den beiden Elektroden von der ersten und der zweiten Kunststofffolie bestimmt.

Von besonderem Interesse ist der Fall, dass zwischen der ersten Kunststofffolie und der zweiten Kunststofffolie eine weitere Komponente wie beispielsweise ein Verpackungsgut oder eine elektrisch leitende Platte oder elektrisch leitende Folie eingebracht ist, da hierdurch ein erheblicher Einfluss auf die Kapazität hervorgerufen werden kann. Ein Verpackungsgut kann beispielsweise bewirken, dass die erste und zweite Kunststofffolie abseits des Überlappungsbereichs einen großen Abstand zueinander aufweisen und sich damit eine andere Kapazität ergibt, als wenn das Verpackungsgut nicht zwischen den beiden Folienlagen angeordnet ist. Bei einer Anordnung einer elektrisch leitende Platte oder einer elektrisch leitenden Folie zwischen der ersten Kunststofffolie und der zweiten Kunststofffolie kann entweder vorgesehen sein, dass die Platte oder Folie bei korrekter Anordnung in den Überlappungsbereich hineinragt oder dass die Platte oder Folie bei korrekter Anordnung nicht in den Überlappungsbereich hineinragt.

Beispielhaft kann vorgesehen sein, dass die Platte oder Folie bei korrekter Anordnung in den Überlappungsbereich hineinragt und sich möglicherweise über die beiden Kunststofffolien hinaus erstreckt. Hierbei kann beabsichtigt sein, dass die Platte oder Folie bei der Durchführung des Schweißvorgangs abdichtend mit den beiden Kunststofffolien verschweißt wird und als elektrischer Kontakt ausgebildet ist.

Alternativ kann vorgesehen sein, dass die Platte oder Folie bei korrekter Anordnung nicht in den Überlappungsbereich hineinragt und somit eine direkte Verschweißung zwischen der ersten Kunststofffolie und der zweiten Kunststofffolie vorgesehen ist.

In Abhängigkeit von der Anordnung der elektrisch leitenden Platte oder der elektrisch leitenden Folie relativ zum Überlappungsbereich zwischen den beiden Kunststofffolien ergibt sich eine charakteristische elektrische Kapazität zwischen der ersten Elektrode und der zweiten Elektrode. Diese charakteristische elektrische Kapazität kann mit einer vorgegebenen charakteristischen Kapazität oder einem vorgegebenen charakteristischen Kapazitätsintervall abgeglichen werden, um hieraus einen Rückschluss ziehen zu können, ob die elektrisch leitende Platte oder die elektrisch leitende Folie in vorgesehener Weise relativ zum Überlappungsbereich angeordnet ist oder ob dies nicht der Fall ist.

Beispielsweise kann anhand der ermittelten Kapazität unterschieden werden, ob eine elektrisch leitende Platte oder eine elektrisch leitende Folie, die bei korrekter Anordnung nicht innerhalb des Überlappungsbereichs angeordnet ist, aufgrund von produktionstechnischen Unzulänglichkeiten doch in den Überlappungsbereich ragt und damit die Qualität der Schweißverbindung und/oder die Funktion des von den beiden Kunststofffolien und der Platte oder Folie gebildeten Produkts in Frage stellt.

Die Kapazitätsmessung kann vor der Durchführung des Schweißvorgangs, also vor Erhitzung der Schweißzone und/oder während der Durchführung des Schweißvorgangs, also während der Erhitzung der Schweißzone und/oder nach der Durchführung des Schweißvorgangs, also nach Beendigung der Erhitzung der Schweißzone, vorgenommen werden.

Hierbei liegt die Überlegung zugrunde, dass die beiden Kunststofffolien und die gegebenenfalls vorgesehene elektrisch leitende Platte oder Folie vor der Durchführung des Schweißvorgangs eine erste Kapazität bestimmen, die mit einem vorgegebenen Kapazitätswert übereinstimmt oder innerhalb eines vorgegebenen ersten Kapazitätsintervalls liegt. Sofern eine solche Übereinstimmung vorliegt, kann davon ausgegangen werden, dass zumindest vor der Durchführung des Schweißvorgangs eine korrekte Anordnung der beiden Kunststofffolien sowie der gegebenenfalls vorgesehenen elektrisch leitenden Platte oder Folie in der Schweißzone gegeben ist. Sofern keine Übereinstimmung der Kapazitätswerte vorliegt, kann beispielsweise vorgesehen sein, dass eine Freigabe der Schweißenergie, die zu Durchführung des Schweißvorgangs an die erste Schweißschiene bereitgestellt werden muss, blockiert wird.

Ergänzend oder alternativ kann während der Durchführung des Schweißvorgangs und/oder nach der Durchführung des Schweißvorgangs eine zweite Kapazität ermittelt werden, die bei korrektem Verlauf des Schweißvorgangs mit einem vorgegebenen zweiten Kapazitätswert übereinstimmt oder innerhalb eines zweiten Kapazitätsintervalls liegt. Hierbei wird davon ausgegangen, dass Abweichungen zwischen der zweiten Kapazität und dem vorgegebenen zweiten Kapazitätswert oder dem zweiten Kapazitätsintervall einen Hinweis darauf geben, dass bei der Durchführung des Schweißvorgangs ein Zustand eingetreten ist, der dazu führt, dass die in der Schweißzone erzeugte Schweißnaht nicht die gewünschten Eigenschaften aufweist und dass das hergestellte Produkt der Überlappungsbereich von vornherein fehlerhaft ist und/oder während des Schweißvorgangs eventuell Fehler auftreten und/oder der Schweißvorgang nicht in gewünschter Weise durchgeführt werden konnte.

Eventuelle Abweichungen in der Kapazität können beispielsweise damit zusammenhängen, dass die erste Kunststofffolie und die zweite Kunststofffolie im Überlappungsbereich nicht ordnungsgemäß aufeinander aufliegen und beispielsweise eine oder mehrere Falten in einer der beiden Kunststofffolien vorliegen und/oder dass eine elektrische leitende Platte oder eine elektrisch leitende Folie nicht korrekt platziert ist. Ergänzend oder alternativ kann eine Abweichung in der Kapazität einen Hinweis darauf geben, dass Fremdkörper im Überlappungsbereich, insbesondere zwischen der ersten Kunststofffolie und der zweiten Kunststofffolie, angeordnet sind, die die Nahtqualität für die zu erstellende Schweißnaht in Frage stellen. Darüber hinaus kann der Fall auftreten, dass der Schweißvorgang aufgrund von Materialeigenschaften der ersten Kunststofffolie und/oder der zweiten Kunststofffolie oder aufgrund von Unzulänglichkeiten der ersten Schweißschiene und/oder der zweiten Schweißschiene sowie des Schweißtransformators nicht korrekt durchgeführt werden kann. Hieraus kann ebenfalls resultieren, dass die Kapazität des Überlappungsbereichs nach der Durchführung des Schweißvorgangs nicht innerhalb eines vorgegebenen Kapazitätsintervalls liegt. Die Ermittlung und Auswertung der Kapazität erfolgt in einer Messeinrichtung, die elektrisch mit der ersten Elektrode und mit der zweiten Elektrode verbunden ist.

Vorteilhafte Weiterbildungen der Erfindung sind Gegenstand der Unteransprüche.

Zweckmäßig ist es, wenn die zweite Elektrode an einer Außenoberfläche der ersten Kunststofffolie angelegt wird. Die zweite Elektrode kann in unmittelbarer Nachbarschaft zur Schweißzone oder beabstandet zur Schweißzone angeordnet sein. Die Anordnung der zweiten Elektrode hängt unter anderem davon ab, ob zwischen den beiden Kunststofffolien ein möglicherweise voluminöses Verpackungsgut oder wenigstens eine oder mehrere elektrisch leitende Platte(n) oder wenigstens eine oder mehrere elektrisch leitende Folie(n) eingebracht ist/sind. Ferner hängt die Platzierung der zweiten Elektrode von den Platzverhältnissen in der Schweißeinrichtung und von einer Förderrichtung für eine Zufuhr und Abfuhr der zu verschweißenden Kunststofffolien ab. Um eine vorteilhafte Kapazitätsermittlung gewährleisten zu können ist ein großflächiger und reproduzierbarer Kontakt zwischen der jeweiligen Elektrode und der Kunststofffolie erforderlich.

Für die im Bereich der Schweißzone angeordnete erste Elektrode kann davon ausgegangen werden, dass durch die von der ersten Schweißschiene auf den Gegenhalter ausgeübte Druckkraft, mit der der Überlappungsbereich während des Schweißvorgangs beaufschlagt wird, eine zuverlässige Kontaktierung zwischen der ersten Elektrode und dem Überlappungsbereich gewährleistet ist. Dies ist insbesondere dann der Fall, wenn die erste Elektrode durch ein in der ersten Schweißschiene angeordnetes elektrisches Widerstandsheizband oder eine Widerstandsbahn in einer in Keramik-Dickschichttechnik hergestellten ersten Schweißschiene gebildet wird.

Für die abseits der Schweißzone angeordnete zweite Elektrode können unterschiedliche Vorkehrungen vorgesehen werden, um eine zuverlässige kapazitive Kopplung mit der Kunststofffolie zu gewährleisten. Eine Vorkehrung sieht vor, dass gegenüberliegend zur zweiten Elektrode ein zweiter Gegenhalter angeordnet ist und dass ein Abstand zwischen der zweiten Elektrode und dem zweiten Gegenhalter variiert werden kann, um einen Anpressdruck zwischen der zweiten Elektrode und der Kunststofffolie zu erzeugen. Alternativ kann vorgesehen sein, dass die zweite Elektrode für eine Unterdruckbeaufschlagung ausgebildet ist, so dass für die Anhaftung der zweiten Elektrode an der Außenoberfläche der Kunststofffolie kein Gegenhalter erforderlich ist, was insbesondere bei beengten Platzverhältnissen in der Schweißeinrichtung von Vorteil sein kann. Beispielhaft kann die zweite Elektrode eine der Kunststofffolie zugewandte, leicht konkav ausgebildete Oberfläche aufweisen, wobei ein Unterdruckkanal an der konkaven Oberfläche aufweist, der mit einer Unterdruckquelle wie beispielsweise einer Vakuumpumpe verbunden sein kann und mit dem die gewünschte Unterdruckbeaufschlagung zwischen zweiter Elektrode und Kunststofffolie bewirkt werden kann.

Bei einer Weiterbildung des Verfahrens ist vorgesehen, dass die zweite Elektrode zwischen der ersten Kunststofffolie und der zweiten Kunststofffolie angeordnet wird. Hierbei bildet die zweite Elektrode einen Bestandteil des Produkts, das mit dem Schweißverfahren hergestellt werden soll. Beispielsweise handelt es sich bei dem Produkt um eine galvanische Zelle, in der wenigstens zwei Elektroden aus unterschiedlichen Materialien und ein Elektrolyt aufgenommen werden, wobei wenigstens eine der Elektroden als zweite Elektrode genutzt wird und für die Verfahrensdurchführung zeitweilig, beispielsweise über eine Kabelverbindung, mit der Messeinrichtung verbunden wird. Je nach Ausgestaltung des Produkts kann vorgesehen sein, dass sich die zweite Elektrode nicht in den Überlappungsbereich erstreckt oder über den Überlappungsbereich hinaus erstreckt ist, um eine elektrische Anschlussfahne für die galvanische Zelle zu bilden.

Bei einer Weiterbildung des Verfahrens ist vorgesehen, dass die erste Elektrode mit einem ersten Spulenende einer Spule verbunden ist und dass die zweite Elektrode mit einem zweiten Spulenende der Spule verbunden ist, um mit der Spule einen Schwingkreis zu bilden, und dass die Kapazität aus einer Schwingungsfrequenz des Schwingkreises ermittelt wird. Hierbei wird ausgenutzt, dass die Schwingungsfrequenz des Schwingkreises von der Induktivität der Spule und der Kapazität des Kondensators, der im Wesentlichen durch die beiden Elektroden und die dazwischen angeordnete Kunststofffolie gebildet wird, abhängig ist. Unter der Voraussetzung, dass die Spule eine feste Induktivität aufweist, bleibt als Parameter, der die Frequenz des Schwingkreises beeinflusst, lediglich die Kapazität des Kondensators, sodass aus der Schwingungsfrequenz die Kapazität ermittelt werden kann.

Bei einer alternativen Ausgestaltung des Verfahrens ist vorgesehen, dass die Kapazität aus einer Schwingungsfrequenz eines astabilen Multivibrators ermittelt wird. Ein astabiler Multivibrator wird auch astabile Kippstufe genannt und ist eine elektronische Schaltung, die als Ausgangssignal nur zwei Zustände kennt, zwischen denen sie periodisch umschaltet. Der astabiler Multivibrator ist üblicherweise mit zwei RC-Gliedern, also jeweils einer Kombination eines Widerstands und eines Kondensators, verwirklicht, die als zeitbestimmende Schaltungsteile wirken. Dementsprechend geht mit einer Variation der Kapazität auch eine Veränderung der Schwingungsfrequenz einher, sodass anhand der Schwingungsfrequenz ein Rückschluss auf die Kapazität gezogen werden kann.

Bei einer weiteren Ausgestaltung des Verfahrens ist vorgesehen, dass eine Schweißsteuerung die elektrische Schweißenergie mit einer ersten Frequenz, vorzugsweise mit einer Frequenz von 50 Hertz, bereitstellt und dass die, insbesondere mit einem Hochpassfilter ausgerüstete, Messeinrichtung die Kapazität oder die Impedanz zwischen der ersten Elektrode und der zweiten Elektrode mit einer zweiten Frequenz, vorzugsweise mit einer Frequenz größer 500 Hertz, ermittelt. Dabei ist die erste Frequenz für die Bereitstellung der elektrischen Schweißenergie auf die Eigenschaften der ersten Schweißschiene oder der ersten Schweißschiene und einer als Gegenhalter dienenden zweiten Schweißschiene abgestimmt. Die Schweißschienen weisen sowohl im Hinblick auf eine Aufheizdauer als auch im Hinblick auf eine Abkühldauer eine gewisse Trägheit auf, so dass für die Durchführung eines Schweißvorgangs keine dauerhafte elektrische Energiezufuhr an die erste Schweißschiene oder die erste sowie die zweite Schweißschiene erforderlich ist. Vielmehr erfolgt die Bereitstellung der elektrischen Schweißenergie mit der ersten Frequenz, insbesondere im Rahmen einer Phasenanschnittsteuerung, um einen geeigneten Einfluss auf die an die erste Schweißschiene oder an die erste sowie die zweite Schweißschiene bereitgestellte elektrische Energiemenge nehmen zu können. Aufgrund der thermischen Trägheit der Schweißschienen kann hierbei beispielsweise auf die Frequenz des elektrischen Versorgungsnetzes zurückgegriffen werden, die typischerweise im Bereich von 50 Hertz liegt.

Demgegenüber erfolgt die Messung der Kapazität oder der Impedanz mit einer zweiten Frequenz, die höher als die erste Frequenz ist. Bei Verwendung eines geeigneten Hochpassfilters für die Messeinrichtung können niederfrequente Signalanteile, die überwiegend von den Schweißströmen erzeugt werden, zumindest weitgehend ausgefiltert werden, so dass lediglich die hochfrequenten Signalanteile für die Bestimmung der Kapazität oder der Impedanz herangezogen werden. Besonders vorteilhaft ist es, wenn die erste Frequenz 50 Hertz beträgt und wenn die zweite Frequenz größer als 500 Hertz, insbesondere größer als 1000 Hertz ist.

Bevorzugt ist vorgesehen, dass eine erste Kapazität vor dem Erhitzen der Schweißzone ermittelt wird und dass eine zweite Kapazität während der Erhitzung der Schweißzone oder nach der Erhitzung der Schweißzone ermittelt wird und dass eine Differenz zwischen der ersten Kapazität und der zweiten Kapazität von der Messeinrichtung zu einem Messsignal verarbeitet wird. Durch diese Vorgehensweise wird bereits vor der Durchführung des Schweißvorgangs die erste Kapazität ermittelt, die gegebenenfalls mit einem vorgegebenen Kapazitätswert verglichen werden kann, um bereits vorliegende Störungen im Überlappungsbereich der ersten Kunststofffolie und der zweiten Kunststofffolie feststellen zu können. Während der Durchführung oder nach der Durchführung des Schweißvorgangs, der durch die Erhitzung der Schweißzone bewirkt wird, erfolgt eine weitere Kapazitätsmessung, wobei auch hier aus den ermittelten Absolutbeträgen der Kapazität und einem Vergleich mit vorgegebenen Kapazitätswerten ein Rückschluss auf den durchgeführten Schweißvorgang gezogen werden kann.

Abschließend erfolgt eine Differenzbildung zwischen der ersten Kapazität und der zweiten Kapazität, wobei die ermittelte Differenz zu einem Messsignal verarbeitet wird, das von der Messeinrichtung oder von einer mit der Messeinrichtung verbundenen, übergeordneten Steuerung ermittelt werden kann.

Bei einer alternativen Ausgestaltung des Verfahrens ist vorgesehen, dass eine kontinuierliche Ermittlung der Kapazität während des Erhitzens der Schweißzone durchgeführt wird. Hierbei kann anhand des Verlaufs der Kapazität, die sich dynamisch während der Durchführung des Schweißvorgangs ändern kann, eine Kontrolle des Schweißvorgangs vorgenommen werden. Beispielsweise kann vorgesehen werden, eine Änderungsgeschwindigkeit für die Kapazität oder einen Maximalwert oder einen Minimalwert für die Kapazität festzustellen.

In weiterer Ausgestaltung des Verfahrens ist vorgesehen, dass eine mit der Messeinrichtung verbundene Schweißsteuerung eine Bereitstellung von elektrischer Schweißenergie an die erste Schweißschiene oder an die erste Schweißschiene und eine als Gegenhalter dienende zweite Schweißschiene vornimmt und eine Übertragung von Steuersignalen zwischen der Messeinrichtung und der Schweißsteuerung vorgenommen wird, um die Bereitstellung der Schweißenergie in Abhängigkeit von Steuersignalen, die von der Messeinrichtung an die Schweißsteuerung übertragen werden, oder die Durchführung der Kapazitätsmessung oder der Impedanzmessung in Abhängigkeit von Schweißsignalen, die von der Schweißsteuerung an die Messeinrichtung übertragen werden, vorzunehmen. Beispielhaft umfasst die Schweißsteuerung einen Mikroprozessor oder Mikrocontroller, auf dem ein Softwareprogramm zur Durchführung des Schweißvorgangs abläuft. Besonders vorteilhaft ist es, wenn die Schweißsteuerung mit einer Mensch-Maschine-Schnittstelle ausgerüstet ist, über die eine Eingabe von Parametern von einem Bediener vorgenommen werden kann.

Die Schweißsteuerung ist für eine gesteuerte oder geregelte Bereitstellung von elektrischer Schweißenergie an die erste Schweißschiene oder sowohl an die erste Schweißschiene als auch an die zweite Schweißschiene ausgebildet. Zwischen der Messeinrichtung und der Schweißsteuerung ist eine Signalübertragung vorgesehen, beispielsweise kann von der Messeinrichtung ein Steuersignal an die Schweißsteuerung bereitgestellt werden, um den Beginn der Kapazitätsmessung oder Impedanzmessung zu signalisieren und der Schweißsteuerung die Information zu geben, dass die Durchführung des Schweißvorgangs gestartet werden kann.

Alternativ kann vorgesehen werden, dass die Schweißsteuerung ein Steuersignal an die Messeinrichtung bereitstellt, um gegebenenfalls eine Kapazitätsmessung zu vorgegebenen Zeitpunkten während der Durchführung des Schweißvorgangs vornehmen zu können.

Bevorzugt ist vorgesehen, dass die Schweißsteuerung eine impulsförmige Bereitstellung der Schweißenergie, insbesondere als Phasenanschnittsteuerung, mit einer Abfolge von Energiepulsen und Impulspausen vornimmt.

In weiterer Ausgestaltung des Verfahrens ist vorgesehen, dass in einer elektrischen Verbindung zwischen der Schweißsteuerung und der ersten Schweißschiene oder der ersten und der zweiten Schweißschiene, insbesondere in unmittelbarer Nachbarschaft zur ersten Schweißschiene, eine elektrische Trenneinrichtung, insbesondere ein Trennschalter, angeordnet ist, und dass die Schweißsteuerung eine Trennung der elektrischen Verbindung mit der ersten Schweißschiene oder mit der ersten und der zweiten Schweißschiene in den Impulspausen vornimmt und dass die Messeinrichtung die Kapazitätsmessung oder die Impedanzmessung in den Impulspausen vornimmt. Hierbei liegt die Überlegung zugrunde, dass die während der Durchführung des Schweißvorgangs zwischen der Schweißsteuerung und der ersten Schweißschiene oder der Schweißsteuerung und der ersten sowie der zweiten Schweißschiene fließenden Schweißströme einen negativen Einfluss auf die Messgenauigkeit für die Kapazitätsmessung haben. Vor diesem Hintergrund kann vorgesehen werden, in denjenigen zeitlichen Abschnitten, in denen aufgrund der impulsförmigen Bereitstellung von Schweißenergie keine Stromfluss zwischen der Schweißsteuerung und der ersten Schweißschiene oder der ersten und der zweiten Schweißschiene vorliegt, zur Verbesserung des Messergebnisses eine vollständige, insbesondere galvanische, Trennung zwischen der Schweißsteuerung und der ersten Schweißschiene bzw. der ersten und der zweiten Schweißschiene vorzunehmen. Dies kann beispielhaft mit einem geeigneten Trennschalter verwirklicht werden, der wahlweise von der Schweißsteuerung oder von der Messeinrichtung angesteuert wird.

Zweckmäßig ist es, wenn die Messeinrichtung mit einem Sensor verbunden ist und mit dem Sensor wenigstens ein Messwert aus der Gruppe: Temperatur in der Schweißzone, Druck in der Schweißzone, Abstand der ersten Schweißschiene von der zweiten Schweißschiene, ermittelt werden kann. Vorzugsweise ist der Sensor an der ersten Schweißschiene angebracht oder weist einen ersten Sensorteil auf, der an der ersten Schweißschiene angebracht ist, sowie einen zweiten Sensorteil, der an der zweiten Schweißschiene angebracht ist. Mit dem Sensor, bei dem es sich beispielsweise um einen Temperatursensor und/oder um einen Drucksensor und/oder um einen Abstandssensor handeln kann, erhält die Messeinrichtung zusätzliche Informationen über die Verhältnisse in der Schweißzone und kann dadurch die Ermittlung der Kapazität oder der Impedanz verbessern bzw. die Plausibilität von ermittelten Messwerten überprüfen.

Die Aufgabe der Erfindung wird für eine Schweißeinrichtung zum Verschweißen von Kunststofffolien in nachfolgender Weise gelöst: die Schweißeinrichtung umfasst eine Schweißsteuerung, die zur Bereitstellung von Schweißenergie ausgebildet ist, mit einer ersten Schweißschiene und mit einem gegenüberliegend zur ersten Schweißschiene angeordneten Gegenhalter, die eine größenvariable Schweißzone begrenzen, die zur Aufnahme eines Überlappungsbereichs einer ersten Kunststofffolie mit einer zweiten Kunststofffolie ausgebildet ist, wobei wenigstens die erste Schweißschiene elektrisch mit der Schweißsteuerung verbunden ist, sowie mit einer Messeinrichtung, die für eine Ermittlung einer Kapazität des zwischen der ersten Schweißschiene und der zweiten Schweißschiene aufgenommenen Überlappungsbereichs ausgebildet ist und elektrisch mit einer in der Schweißzone angeordneten ersten Elektrode und elektrisch mit einer abseits der Schweißzone angeordneten zweiten Elektrode verbunden ist.

Beispielhaft kann vorgesehen sein, dass eine kontinuierliche Ermittlung der Kapazität während des Erhitzens der Schweißzone durchgeführt wird. Hierbei kann anhand des Verlaufs der Kapazität und/oder Impedanz, die sich dynamisch während der Durchführung des Schweißvorgangs ändern kann, eine Kontrolle des Schweißvorgangs vorgenommen werden.

Bevorzugt ist vorgesehen, dass die Schweißsteuerung elektrisch mit der Messeinrichtung verbunden ist und dass die Schweißsteuerung für eine Bereitstellung von elektrischer Schweißenergie an die erste Schweißschiene oder an die erste Schweißschiene und eine als Gegenhalter ausgebildete zweite Schweißschiene in Abhängigkeit von Messsignalen der Messeinrichtung ausgebildet ist. Hierbei folgt die Funktion der Schweißsteuerung der Funktion der Messeinrichtung. Beispielsweise kann vorgesehen werden, dass die Messeinrichtung zunächst eine Kapazitätsmessung oder Impedanzmessung vor der Erhitzung der Schweißzone durchführt und anschließend ein geeignetes Steuersignal an die Schweißsteuerung bereitstellt, damit diese die elektrische Energie zu Erwärmung der Schweißzone zur Verfügung stellt. Anschließend kann wenigstens während einer Impulspause in der Erhitzungsphase oder nach Beendigung der Erhitzung eine weitere Kapazitätsmessung vorgenommen werden.

Bei einer alternativen Ausgestaltung ist vorgesehen, dass die Schweißsteuerung elektrisch mit der Messeinrichtung verbunden ist und dass die Schweißsteuerung für eine Bereitstellung von Schweißenergie an die erste Schweißschiene oder an die erste Schweißschiene und die zweite Schweißschiene sowie zur Ausgabe eines Schweißsignals an die Messeinrichtung ausgebildet ist und dass die Messeinrichtung für die Durchführung der Messung in Abhängigkeit von den Schweißsignalen der Schweißeinrichtung ausgebildet ist. Bei dieser Variante folgt die Funktion der Messeinrichtung der Funktion der Schweißsteuerung, so dass die Messeinrichtung anhand von Schweißsignalen, bei denen es sich um Steuersignale der Schweißsteuerung handelt, die Messung der Kapazität oder Impedanz durchführt.

In weiterer Ausgestaltung der Erfindung ist vorgesehen, dass die zweite Elektrode an einer Außenoberfläche der ersten Kunststofffolie angeordnet ist.

Bei einer alternativen Weiterbildung der Erfindung ist vorgesehen, dass die zweite Elektrode zwischen der ersten Kunststofffolie und der zweiten Kunststofffolie angeordnet ist.

Vorteilhaft ist es, wenn in einer elektrischen Verbindung zwischen der Schweißsteuerung und der ersten Schweißschiene oder zwischen der Schweißsteuerung und der ersten Schweißschiene und der zweiten Schweißschiene, insbesondere in unmittelbarer Nachbarschaft zur ersten Schweißschiene, eine elektrische Trenneinrichtung, insbesondere ein Trennschalter, angeordnet ist und dass die Schweißsteuerung für eine zeitweilige Trennung der elektrischen Verbindung mit der ersten Schweißschiene oder mit der ersten und der zweiten Schweißschiene ausgebildet ist.

Zweckmäßig ist es, wenn die erste Elektrode mit einem ersten Spulenende einer Spule verbunden ist und wenn die zweite Elektrode mit einem zweiten Spulenende der Spule verbunden ist, um mit der Spule einen Schwingkreis zu bilden, und wenn die Kapazität aus einer Schwingungsfrequenz des Schwingkreises ermittelt wird.

Alternativ ist vorgesehen, dass die Kapazität aus einer Schwingungsfrequenz eines astabilen Multivibrators ermittelt wird oder dass die Schweißsteuerung die elektrische Schweißenergie mit einer ersten Frequenz, vorzugsweise mit einer Frequenz von 50 Hertz, bereitstellt und dass die, insbesondere mit einem Hochpassfilter ausgerüstete, Messeinrichtung die Kapazität zwischen der ersten Elektrode und der zweiten Elektrode mit einer zweiten Frequenz, vorzugsweise mit einer Frequenz größer 500 Hertz, ermittelt.

In weiterer Ausgestaltung der Erfindung ist vorgesehen, dass die Messeinrichtung mit einem, insbesondere der ersten Schweißschiene zugeordneten Sensor verbunden ist, der für eine Ermittlung wenigstens eines Messwerts aus der Gruppe: Temperatur in der Schweißzone, Druck in der Schweißzone, Abstand der ersten Schweißschiene von der zweiten Schweißschiene, ausgebildet ist.

Eine vorteilhafte Ausführungsform der Erfindung ist in der Zeichnung dargestellt. Hierbei zeigt:
- Figur 1:: eine streng schematische Übersichtsdarstellung einer ersten Ausführungsform einer Schweißeinrichtung zum Verschweißen von Kunststofffolien,
- Figur 2:: eine streng schematische Übersichtsdarstellung einer zweiten Ausführungsform einer Schweißeinrichtung zum Verschweißen von Kunststofffolien,
- Figur 3:: eine streng schematische Übersichtsdarstellung einer dritten Ausführungsform einer Schweißeinrichtung zum Verschweißen von Kunststofffolien, und
- Figur 4: ein streng schematisiertes Blockschaltbild von elektrischen Funktionskomponenten einer vierten Ausführungsform einer Schweißeinrichtung.

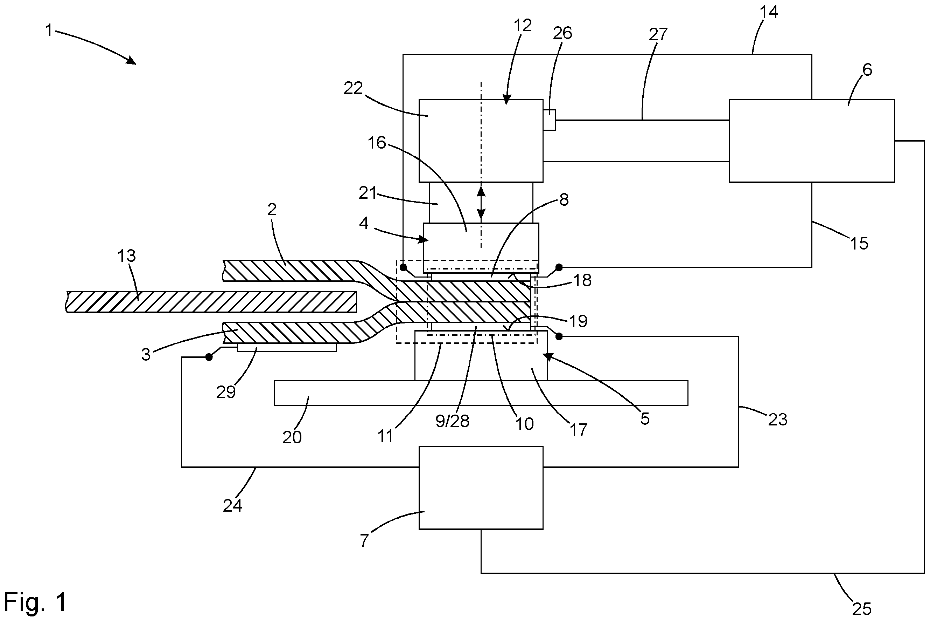

Eine in der nicht maßstäblichen Figur 1 rein schematisch dargestellte Schweißeinrichtung 1 ist für eine stoffschlüssige Verbindung einer ersten Kunststofffolie 2 mit einer zweiten Kunststofffolie 3 in einem Überlappungsbereich 11 vorgesehen. Rein exemplarisch weisen die erste Kunststofffolie 2 und die zweite Kunststofffolie 3 jeweils die gleiche Dicke auf und sind jeweils mit einem Randbereich überlappend angeordnet, wodurch der Überlappungsbereich 11 gebildet wird. Zumindest ein Teilbereich dieses Überlappungsbereichs 11 ist für die Verschweißung mit Hilfe der Schweißeinrichtung 1 vorgesehen und aus diesem Grund in einer Schweißzone 10 angeordnet, die von einer ersten Schweißschiene 4 und einem gegenüberliegend zur ersten Schweißschiene 4 angeordneten Gegenhalter 5 begrenzt wird. Abseits des Überlappungsbereichs 11 ist zwischen der ersten Kunststofffolie 2 und der zweiten Kunststofffolie 3 ein rein exemplarisch plattenförmig ausgebildetes Verpackungsgut 13 angeordnet, bei dem es sich beispielsweise um eine Elektrode einer galvanischen Zelle, insbesondere um eine Metallplatte oder eine elektrisch leitendend beschichtete Kunststofffolie handeln kann. Sowohl die Kunststofffolien 2, 3 als auch das Verpackungsgut 13 sind aus Gründen der Übersichtlichkeit abgeschnitten und können sich in der Praxis weiter nach links gemäß der Darstellung der Figur 1 erstrecken.

Rein exemplarisch erstrecken sich sowohl die erste Schweißschiene 4 als auch der Gegenhalter 5 mit einer größten Erstreckung in einer Raumrichtung, die normal zur Darstellungsebene der Figur 1 ausgerichtet ist. Hierbei weisen sowohl die erste Schweißschiene 4 als auch der Gegenhalter 5 eine Längenerstreckung auf, die erheblich größer als die in der Figur 1 erkennbare Querschnittsprofilierung der ersten Schweißschiene 4 und des Gegenhalters 5 ist.

Beispielhaft umfasst die erste Schweißschiene 4 einen ersten Grundkörper 16, der gemäß der Darstellung der Figur 1 rechteckig profiliert ist und der sich normal zur Darstellungsebene der Figur 1 mit einer nicht dargestellten längsten Kante erstreckt. Rein exemplarisch ist der erste Grundkörper 16 als Aluminiumprofil ausgebildet und trägt an einer ersten Arbeitsfläche 18 ein erstes Heizband 8. Der Gegenhalter 5 ist rein exemplarisch als zweite Schweißschiene bezeichnet ausgebildet, die jedoch bei der Ausführungsform gemäß der Figur 1 nicht elektrisch angeschlossen wird. Der Gegenhalter 5 umfasst einen zweiten Grundkörper 17, der an einer zweiten Arbeitsfläche 19 mit einem als erste Elektrode dienenden zweiten Heizband 9 versehen ist.

Sowohl das erste Heizband 8 als auch das zweite Heizband 9 weisen einen nicht näher dargestellten Schichtaufbau auf, der beispielhaft aus einer unteren Isolationsschicht aus Kunststoffmaterial, einem Widerstandsheizband aus einem Metallmaterial wie Kupfer und einer oberen Isolationsschicht aus Kunststoffmaterial gebildet sein kann. Die obere Isolationsschicht kann mit einer Anti-Haftschicht aus einem PTFE-Material bedeckt sein, das für einen direkten Kontakt mit der jeweiligen Kunststofffolie 2, 3 vorgesehen ist.

Beispielhaft ist bei der ersten Ausführungsform der Schweißeinrichtung 1 gemäß der Figur 1 lediglich das erste Heizband 8 elektrisch mittels einer ersten Versorgungsleitung 14 und einer zweiten Versorgungsleitung 15 mit einer Schweißsteuerung 6 verbunden, die für eine Stromversorgung des ersten Heizbands 8 ist, um durch Strombeaufschlagung eine definierte Erwärmung des Heizbands 8 für die Durchführung des Schweißvorgangs in der Schweißzone 10 zu ermöglichen.

Rein exemplarisch liegt der Gegenhalter 5 auf einem Arbeitstisch 20 auf, an dem in nicht näher dargestellter Weise auch ein Aktor 12 festgelegt ist. Der Aktor 12 umfasst ein Aktorgehäuse 21 sowie ein linearbeweglich im Aktorgehäuse 21 aufgenommenes Aktorglied 22, das stirnseitig mit einer Oberseite der ersten Schweißschiene 4 verbunden ist. Rein exemplarisch handelt es sich bei dem Aktor 12 um einen elektrischen Linearantrieb, insbesondere einen Gewindespindelantrieb, mit dessen Hilfe eine Verkleinerung oder Vergrößerung eines Abstands zwischen der ersten Schweißschiene 4 und dem Gegenhalter 5 bewirkt werden kann. Zu diesem Zweck ist der Aktor 12 elektrisch mit der Schweißsteuerung 6 verbunden, die zur Bereitstellung von Antriebsenergie bzw. von Antriebssignalen an den Aktor 12 ausgebildet ist.

Dementsprechend kann mit den Komponenten: Arbeitstisch 20, Schweißsteuerung 6, Aktor 12, erste Schweißschiene 4 und Gegenhalter 5 ein Verschweißen des Überlappungsbereichs 11 zwischen der ersten Kunststofffolie 2 und der zweiten Kunststofffolie 3 in der Schweißzone 10 vorgenommen werden. Um eine Überwachung dieses Schweißvorgangs zu ermöglichen, ist das als erste Elektrode 28 dienende zweite Heizband 9 über eine erste Messleitung 23 mit einer Messeinrichtung 7 elektrisch verbunden. Die Messeinrichtung 7 ist ferner über eine zweite Messleitung 24 mit einer zweiten Elektrode 29 verbunden, die abseits der Schweißzone 10 rein exemplarisch an einer Außenoberfläche der zweiten Kunststofffolie 3 anliegt. Bei dieser Ausführungsform einer Schweißeinrichtung 1 liegt eine vollständige galvanische Trennung zwischen dem elektrischen Stromkreis für die erste Schweißschiene 4 und dem elektrischen Stromkreis für die Messeinrichtung 7 vor.

Rein exemplarisch ist vorgesehen, dass die zweite Elektrode 29 mittels Unterdruck an der Außenoberfläche der zweiten Kunststofffolie 3 angehaftet wird. Alternativ kann vorgesehen sein, über eine nicht dargestellte Vorrichtung einen Anpressdruck auf die zweite Elektrode 29 auszuüben, damit die gewünschte Kopplung mit der Außenoberfläche der zweiten Kunststofffolie 3 gewährleistet ist. Die Messeinrichtung 7 ist dazu ausgebildet, eine Kapazität zwischen der ersten Elektrode 28 und der zweiten Elektrode 29 zu ermitteln, um daraus Rückschlüsse ziehen zu können, ob die Kunststofffolien 2, 3 im Überlappungsbereich 11 ordnungsgemäß angeordnet sind und/oder ob das Verpackungsgut 13 in unerwünschter Weise in den Überlappungsbereich hineinragt, wodurch die Qualität der Verschweißung im Überlappungsbereich 11 in Frage gestellt sein könnte.

Die Messeinrichtung 7 steht über eine Signalleitung 25 in elektrischer Verbindung mit der Schweißsteuerung 6, wobei über die Signalleitung 25 ein Informationsaustausch zwischen der Messeinrichtung 7 und der Schweißsteuerung 6 im Hinblick auf einen jeweils aktuell vorliegenden Kapazitätswert und/oder im Hinblick auf einen zeitlichen Verlauf des Kapazitätswert während der Durchführung des Schweißvorgangs ermöglicht wird.

Beispielhaft ist vorgesehen, dass die Schweißsteuerung 6 über eine Sensorleitung 27 mit einem Sensor 26 in elektrischer Verbindung steht, um Sensorsignale des Sensors 26 abfragen zu können. Rein exemplarisch handelt es sich beim Sensor 26 um einen am Aktor 12 angebrachten Kraftsensor, der zur Erfassung einer vom Aktor 12 auf die erste Schweißschiene 4 aufgebrachte Druckkraft ausgebildet ist. Eine Auswertung der Sensorsignale des Sensors 26 kann in der Schweißsteuerung 6, beispielsweise für eine Kraftregelung für den Aktor 12, und/oder in der Messeinrichtung 7, beispielsweise zur Prüfung eines ausreichend großen Anpressdrucks für die erste Elektrode 28, vorgenommen werden.

Rein exemplarisch ist vorgesehen, dass die erste Kunststofffolie 2 und die zweite Kunststofffolie 3 im Überlappungsbereich 11 flächig und ohne Luftspalte oder unerwünschte Falten aneinander anliegen, was gewissermaßen den Idealzustand für das nachfolgende Verschweißen der beiden Kunststofffolien 2, 3 in der Schweißzone 10 darstellt. Sofern im Überlappungsbereich 11 jedoch unerwünschte Falten vorliegen würden oder sich Fremdkörper, insbesondere das Verpackungsgut 13, im Überlappungsbereich 11 befinden sollten, wird die Qualität der Verschweißung im Überlappungsbereich in Frage gestellt.

Um ein Vorhandensein solcher Störungen beurteilen zu können, ist die Messeinrichtung 7 vorgesehen, die zur Kapazitätsbestimmung für den aus der ersten Elektrode 28, der zweiten Elektrode 29, den Kunststofffolien 2, 3 und dem Verpackungsgut 13 gebildeten Kondensator ausgebildet ist.

Für die nachstehende Beschreibung der zweiten Ausführungsform einer Schweißeinrichtung 61 und der dritten Ausführungsform einer Schweißeinrichtung 71 werden für funktionsgleiche Komponenten die gleichen Bezugszeichen wie bei der ersten Ausführungsform der Schweißeinrichtung 1 genutzt.

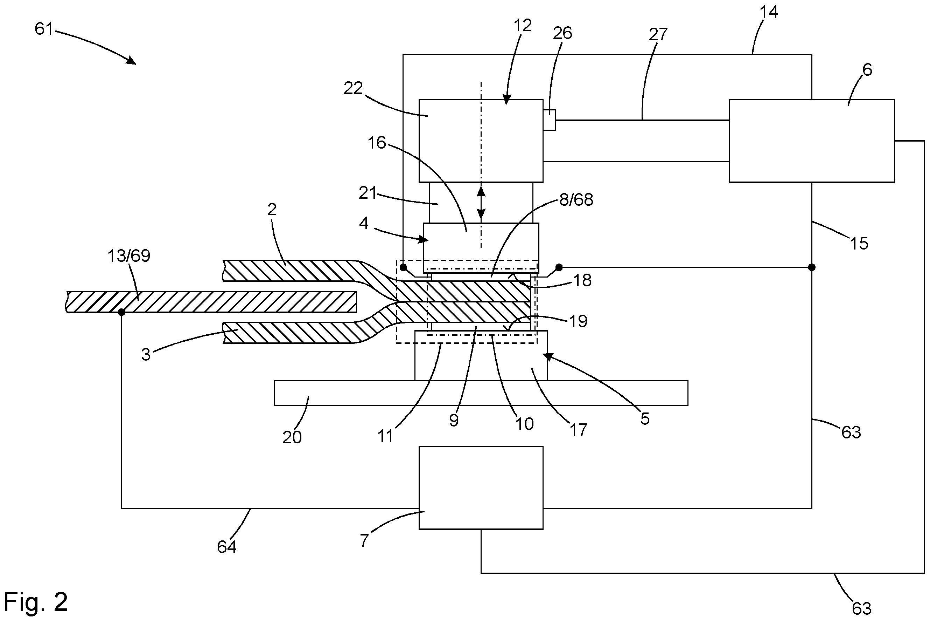

Die zweite Ausführungsform einer Schweißeinrichtung 61 unterscheidet sich von der ersten Ausführungsform einer Schweißeinrichtung 1 dadurch, dass eine erste Elektrode 68 vom ersten Heizband 8 der ersten Schweißschiene 4 gebildet wird. Ferner wird eine zweite Elektrode 69 von dem elektrisch leitfähig ausgebildeten Verpackungsgut 13 gebildet. Die erste Messleitung 63 zweigt von der ersten Versorgungsleitung 14 ab. Die zweite Messleitung 64 ist elektrisch mit dem Verpackungsgut 13 verbunden, das die zweite Elektrode 69 bildet. Dementsprechend liegt abweichend von der Schweißeinrichtung 1 bei der Schweißeinrichtung 61 eine galvanische Kopplung zwischen der Schweißsteuerung 6 und der Messeinrichtung 7 vor. Sofern keine galvanische Kopplung zwischen der Schweißsteuerung 6 und der Messeinrichtung 7 gewünscht sein sollte, könnte in Abwandlung der Schweißeinrichtung 2 an der Stelle des ersten Heizbands 8 das zweite Heizband 9 des Gegenhalters 5 elektrisch mit der Messeinrichtung 7 verbunden werden. Vorteilhaft bei der Schweißeinrichtung 61 ist es, dass durch die direkte elektrische Kopplung der Messeinrichtung 7 mit dem als zweite Elektrode 69 dienenden Verpackungsgut 13 eine stärkere Kapazitätsänderung zu erwarten ist, sofern das Verpackungsgut 13 nicht gemäß der Darstellung der Figur 2 abseits des Überlappungsbereichs 11, sondern vielmehr bereichsweise im Überlappungsbereich 11 angeordnet ist.

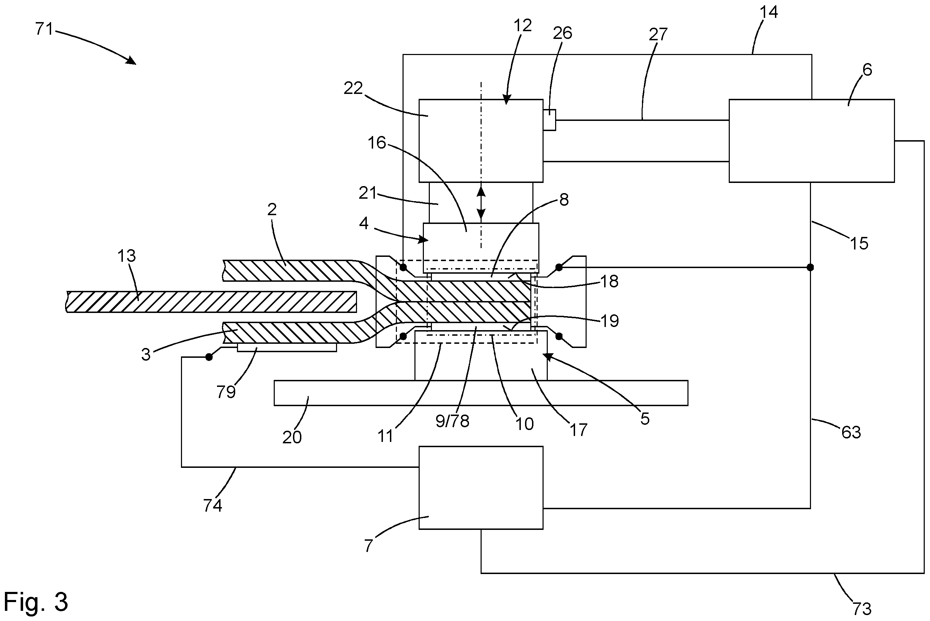

Bei der in Figur 3 dargestellten dritten Ausführungsform einer Schweißeinrichtung 71 wird neben der ersten Schweißschiene 4 auch die als Gegenhalter 5 dienende zweite Schweißschiene elektrisch mit der Schweißsteuerung 6 verbunden, sodass eine beidseitige Erwärmung des Überlappungsbereichs 11 durchgeführt werden kann. Dabei bilden die Heizbänder 8, 9 gemeinsam die erste Elektrode 78. Rein exemplarisch ist die zweite Elektrode 79 in gleicher Weise wie bei der Schweißeinrichtung 1 gemäß der Figur 1 an der Außenoberfläche der zweiten Kunststofffolie 3 angeheftet.

Bei einer nicht dargestellten Variante der Schweißeinrichtung 71 wird die zweite Elektrode durch das Verpackungsgut 13 gebildet, wie dies auch bei der zweiten Ausführungsform der Schweißeinrichtung 61 gemäß der Figur 2 der Fall ist.

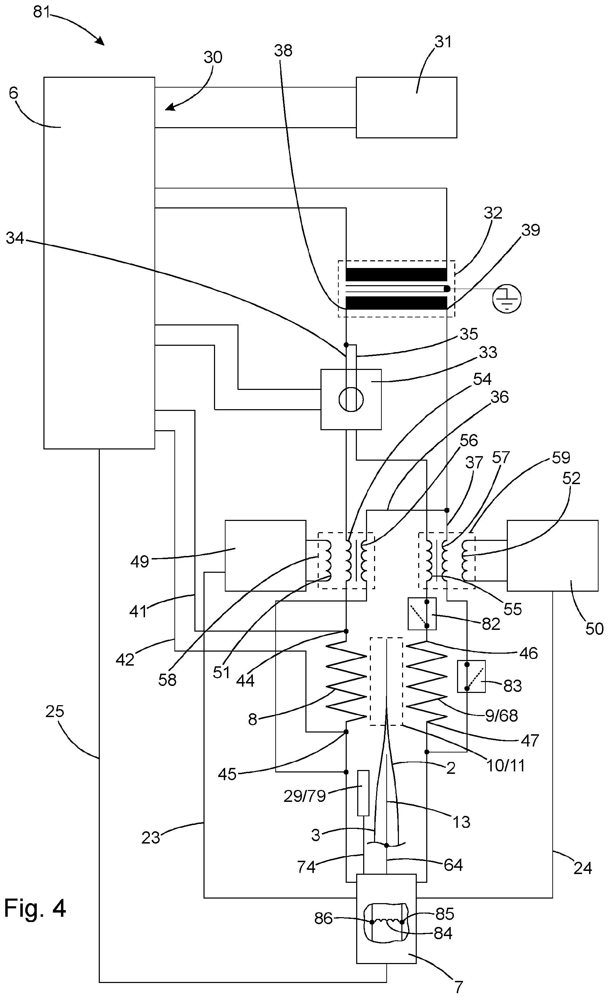

In dem Blockschaltbild gemäß der Figur 4 ist eine elektrische Verschaltung einer Schweißeinrichtung 81 gezeigt, wobei für funktionsgleiche Komponenten die gleichen Bezugszeichen wie für die Schweißeinrichtung gemäß der Figur 1 verwendet werden. Die Darstellung der Figur 4 ist auf die elektrische Verschaltung der Komponenten der Schweißeinrichtung 81 ausgerichtet, während der mechanische Aufbau der Schweißeinrichtung 81 in der Figur 4 nicht von Bedeutung ist.

Übereinstimmend mit der in Figur 1 gezeigten Schweißeinrichtung 1 umfasst die Schweißeinrichtung 81 gemäß der Darstellung der Figur 4 eine Schweißsteuerung 6, eine Messeinrichtung 7, ein erstes Heizband 8, das einer in der Figur 4 nicht gezeigten ersten Schweißschiene zugeordnet ist, und ein zweites Heizband 9, das einer in der Figur 4 nicht gezeigten zweiten Schweißschiene zugeordnet ist.

Die Schweißsteuerung 6 und die Messeinrichtung 7 sind gemäß der Darstellung der Figur 4 über die Signalleitung 25 elektrisch miteinander verbunden, wobei über die Signalleitung eine unidirektionale Signalübertragung von der Messeinrichtung 7 zur Schweißsteuerung 6 oder eine bidirektionale . Rein exemplarisch ist vorgesehen, dass die Schweißsteuerung 6 und die Messeinrichtung 7 jeweils einen separat ausgebildeten Prozessor mit entsprechender Peripherie und geeigneter Software aufweisen

Wie nachstehend näher beschrieben wird, kann die Messeinrichtung 7 in unterschiedlichen Betriebsweisen arbeiten. In der Praxis arbeitet die Messeinrichtung 7 typischerweise in einer der Betriebsweisen, so dass auf diejenigen Komponenten, die für die jeweils anderen Betriebsweisen vorgesehen sind, verzichtet werden kann.

Die Schweißsteuerung 6 weist einen Netzanschluss 30 auf, der zur Verbindung mit einer Stromquelle 31 ausgebildet ist. Ferner ist die Schweißsteuerung 6 elektrisch mit einer Primärseite eines Schweißtransformators 32 verbunden, mit dem die primärseitig von der Schweißsteuerung 6 bereitgestellte Schweißenergie sekundärseitig in die zur Durchführung des Schweißvorgangs erforderlichen Schweißströme für das erste Heizband 8 und das zweite Heizband 9 umgesetzt werden.

Für eine Überwachung des Schweißvorgangs ist ein Stromwandler 33 mit der Schweißsteuerung 6 verbunden, der eine erste Heizbandleitung 34 sowie eine zweite Heizbandleitung 35 umgibt, die sich von einem ersten Stromanschluss 38 bis zum ersten Heizband 8 bzw. zum zweiten Heizband 9 erstrecken. Mit dem Stromwandler 33 wird eine kontaktlose Schweißstromerfassung für den an die beiden Widerstandsbänder 8, 9 bereitgestellten Schweißstrom durchgeführt.

Die erste Heizbandleitung 34 erstreckt sich hierbei vom ersten Stromanschluss 38 bis zu einem ersten Heizbandanschluss 44 des ersten Heizbands 8, wobei in der ersten Heizbandleitung 34 eine erste Übertragerspule 54 angeordnet ist. Die zweite Heizbandleitung 35 erstreckt sich vom ersten Stromanschluss 38 bis zu einem ersten Heizbandanschluss 46 des zweiten Heizbands 9, wobei in der zweiten Heizbandleitung 35 eine zweite Übertragerspule 55 angeordnet ist.

Ausgehend von einem zweiten Stromanschluss 39 des Schweißtransformators 32 erstreckten sich eine dritte Heizbandleitung 36, die mit dem zweiten Heizbandanschluss 45 des ersten Heizbands 8 verbunden ist, sowie eine vierte Heizbandleitung 37, die mit dem zweiten Heizbandanschluss 47 des zweiten Heizbands 9 verbunden ist. Hierbei ist vorgesehen, dass in der dritten Heizbandleitung 36 eine dritte Übertragerspule 56 angeordnet ist und dass in der dritten Heizbandleitung 37 eine vierte Übertragerspule 57 angeordnet ist.

Am ersten Heizbandanschluss 44 sowie am zweiten Heizbandanschluss 45 des ersten Heizbands 8 sind jeweils Messleitungen 41, 42 angeschlossen, die mit der Schweißsteuerung 6 verbunden sind und die es der Schweißsteuerung 6 ermöglichen, einen Spannungsabfall am ersten Heizband 8 zu ermitteln, um zusätzliche Informationen über den Verlauf des Schweißvorgangs zu gewinnen.

Die erste Übertragerspule 54 bildet zusammen mit der dritten Übertragerspule 56 und einer ersten Koppelspule 51, die einer Anregungseinrichtung 49 zugehörig ist, einen ersten Übertrager 58, der für eine Einkopplung eines von der Anregungseinrichtung 49 bereitgestellten hochfrequenten Anregungssignals in das erste Heizband 8 ausgebildet ist. Die Anregungseinrichtung 49 ist über die erste Messleitung 23 mit der Messeinrichtung 7 verbunden.

Die zweite Übertragerspule 55 bildet zusammen mit der vierten Übertragerspule 57 und einer zweiten Koppelspule 52, die einer Detektionseinrichtung 50 zugehörig ist, einen zweiten Übertrager 59, der für eine Auskopplung und Auswertung eines auf das zweite Heizband 9 einwirkenden hochfrequenten Anregungssignals ausgebildet ist. Die Detektionseinrichtung 50 ist über die zweite Messleitung 24 mit der Messeinrichtung 7 verbunden.

Für einen Betrieb in einer aus der EP 4 137 296 A1 bekannten ersten Betriebsweise ist die Messeinrichtung 7 dazu ausgebildet, anhand des von der Anregungseinrichtung 49 auf das erste Heizband 8 eingekoppelten Anregungssignals und der von der Detektionseinrichtung 50 am zweiten Heizband 9 ausgekoppelten Signalantwort die Impedanz und daraus die Kapazität des vom ersten Heizband 8, vom zweiten Heizband 9 sowie von der ersten Kunststofffolie 2, der zweiten Kunststofffolie 3 und dem Verpackungsgut 13 gebildeten Kondensators zu ermitteln. Hierzu kann die Messeinrichtung rein exemplarisch einen LC-Schwingkreis mit einer Spule 84 aufweisen, deren erstes Spulenende 85 mit dem als erste Elektrode anzusehenden ersten Heizband 8 und deren zweites Spulenende 86 mit dem als zweite Elektrode anzusehenden zweiten Heizband 9 verbunden ist. Die Schwingungsfrequenz des Schwingkreises ist von der Kapazität des vom ersten Heizband 8, vom zweiten Heizband 9 sowie von der ersten Kunststofffolie 2, der zweiten Kunststofffolie 3 und dem Verpackungsgut 13 gebildeten Kondensators abhängig und kann in einer nicht dargestellten Auswerteschaltung, insbesondere einem Mikroprozessor, ermittelt und weiterverarbeitet werden. Ferner ist die Messeinrichtung 7 dazu eingerichtet, aus einem oder mehreren Absolutwerten der ermittelten Kapazität und/oder einer zeitlichen Änderung der Kapazität Rückschlüsse auf die Qualität der Schweißnaht für die Verbindung zwischen der ersten Kunststofffolie 2 und der zweiten Kunststofffolie 3 zu ziehen.

Für einen Betrieb in einer zweiten Betriebsweise gemäß der Ausführungsform der Figur 1 ist vorgesehen, die beiden Schalter 82 und 83 zu öffnen, so dass das zweite Heizband 9 von der Stromversorgung abgekoppelt ist und damit als erste Elektrode und damit als galvanisch getrennte Kondensatorplatte genutzt werden kann. Die Messeinrichtung 7 ist entsprechend der Figur 1 auch mit der zweiten Elektrode 29 verbunden, die an der Außenoberfläche der zweiten Kunststofffolie 3 anliegt.

Für einen Betrieb in einer dritten Betriebsweise gemäß der Ausführungsform der Figur 2 ist vorgesehen, die beiden Schalter 82 und 83 zu öffnen, so dass das zweite Heizband 9 von der Stromversorgung abgekoppelt ist. Abweichend von der zweiten Betriebsweise wird die erste Elektrode vom ersten Heizband 8 gebildet, ferner steht die Messeinrichtung 7 entsprechend der Figur 2 in direkter elektrischer Verbindung mit dem Verpackungsgut 13.

Für einen Betrieb in einer vierten Betriebsweise gemäß der Ausführungsform der Figur 3 ist vorgesehen, dass die beiden Schalter 82 und 83 geschlossen sind, so dass das zweite Heizband 9 zusammen mit dem ersten Heizband 8 mit der Stromversorgung gekoppelt ist. Ferner ist die Messeinrichtung 7 entsprechend der Figur 3 auch mit der zweiten Elektrode 29 verbunden, die an der Außenoberfläche der zweiten Kunststofffolie 3 anliegt.

## Patentansprüche

1. Verfahren zur Überwachung eines Schweißvorgangs für Kunststofffolien (2, 3) mit den Schritten: Anordnen eines Überlappungsbereichs (11), der von einer ersten Kunststofffolie (2) und von einer zweiten Kunststofffolie (3) gebildet wird, in einer Schweißzone (10), die von einer ersten Schweißschiene (4) und von einem gegenüberliegend zur ersten Schweißschiene (4) angeordneten Gegenhalter (5) begrenzt wird, Ermitteln einer vom Überlappungsbereich (11) bestimmten Kapazität zwischen einer ersten Elektrode (28; 68; 78), die in der Schweißzone (10) angeordnet ist und einer zweiten Elektrode (29; 69; 79), die abseits der Schweißzone (10) angeordnet ist, vor einer Erhitzung der Schweißzone (10) und/oder während der Erhitzung der Schweißzone (10) und/oder nach der Erhitzung der Schweißzone (10).

2. Verfahren nach Anspruch 1, **gekennzeichnet durch** den Schritt, dass die zweite Elektrode (29; 69; 79) an einer Außenoberfläche der ersten Kunststofffolie (2) oder der zweiten Kunststofffolie (3) angelegt wird.

3. Verfahren nach Anspruch 1, **gekennzeichnet durch** den Schritt, dass die zweite Elektrode (29; 69; 79) zwischen der ersten Kunststofffolie (2) und der zweiten Kunststofffolie (3) angeordnet wird.

4. Verfahren nach Anspruch 1, 2 oder 3, **dadurch gekennzeichnet, dass** die erste Elektrode (28; 68; 78) mit einem ersten Spulenende (85) einer Spule (84) verbunden ist und dass die zweite Elektrode (29; 69; 79) mit einem zweiten Spulenende (86) der Spule (84) verbunden ist, um mit der Spule (84) einen Schwingkreis zu bilden, und dass die Kapazität aus einer Schwingungsfrequenz des Schwingkreises ermittelt wird.

5. Verfahren nach Anspruch 1, 2 oder 3, **dadurch gekennzeichnet, dass** die Kapazität aus einer Schwingungsfrequenz eines astabilen Multivibrators ermittelt wird.

6. Verfahren nach Anspruch 1, 2, oder 3, **dadurch gekennzeichnet, dass** eine Schweißsteuerung die elektrische Schweißenergie mit einer ersten Frequenz, vorzugsweise mit einer Frequenz von 50 Hertz, bereitstellt und dass eine, insbesondere mit einem Hochpassfilter ausgerüstete, Messeinrichtung die Kapazität zwischen der ersten Elektrode und der zweiten Elektrode mit einer zweiten Frequenz, vorzugsweise mit einer Frequenz größer 500 Hertz, ermittelt.

7. Verfahren nach einem der vorhergehenden Ansprüche, **dadurch gekennzeichnet, dass** die Messeinrichtung (7) mit einem Sensor (26) verbunden ist und mit dem Sensor wenigstens ein Messwert aus der Gruppe: Temperatur in der Schweißzone (10), Druck in der Schweißzone (10), Abstand der ersten Schweißschiene (4) von der zweiten Schweißschiene (5), ermittelt werden kann.

8. Schweißeinrichtung (1) zum Verschweißen von Kunststofffolien, mit einer Schweißsteuerung (6), die zur Bereitstellung von Schweißenergie ausgebildet ist, mit einer ersten Schweißschiene (4) und mit einem gegenüberliegend zur ersten Schweißschiene (4) angeordneten Gegenhalter (5), die eine größenvariable Schweißzone (10) begrenzen, die zur Aufnahme eines Überlappungsbereichs (11) einer ersten Kunststofffolie (2) mit einer zweiten Kunststofffolie (3) ausgebildet ist, wobei wenigstens die erste Schweißschiene (4) elektrisch mit der Schweißsteuerung (6) verbunden ist, sowie mit einer Messeinrichtung (7), die für eine Ermittlung einer Kapazität des zwischen der ersten Schweißschiene (4) und dem Gegenhalter(5) aufgenommenen Überlappungsbereichs (11) ausgebildet ist und elektrisch mit einer in der Schweißzone (10) angeordneten ersten Elektrode (28; 68; 78) und elektrisch mit einer abseits der Schweißzone (10) angeordneten zweiten Elektrode (29; 69; 79) verbunden ist.

9. Schweißeinrichtung (1) nach Anspruch 8, **dadurch gekennzeichnet, dass** die zweite Elektrode (29; 69; 79) an einer Außenoberfläche der ersten Kunststofffolie (2) angeordnet ist.

10. Schweißeinrichtung (1) nach Anspruch 8, **dadurch gekennzeichnet, dass** die zweite Elektrode (29; 69; 79) zwischen der ersten Kunststofffolie (2) und der zweiten Kunststofffolie (3) angeordnet ist.

11. Schweißeinrichtung (1) nach Anspruch 8, 9 oder 10, **dadurch gekennzeichnet, dass** die Schweißsteuerung (6) elektrisch mit der Messeinrichtung (7) verbunden ist und dass die Schweißsteuerung (6) für eine Bereitstellung von elektrischer Schweißenergie an die erste Schweißschiene (4) oder an die erste Schweißschiene (4) und die zweite Schweißschiene (5) in Abhängigkeit von Messsignalen der Messeinrichtung (7) ausgebildet ist.

12. Schweißeinrichtung (1) nach Anspruch 8, 9 oder 10, **dadurch gekennzeichnet, dass** die Schweißsteuerung (6) elektrisch mit der Messeinrichtung (7) verbunden ist und dass die Schweißsteuerung (6) für eine Bereitstellung von Schweißenergie an die erste Schweißschiene (4) oder an die erste Schweißschiene (4) und die zweite Schweißschiene (5) sowie zur Ausgabe eines Schweißsignals an die Messeinrichtung (7) ausgebildet ist und dass die Messeinrichtung (7) für die Durchführung der Messung in Abhängigkeit von den Schweißsignalen der Schweißeinrichtung (6) ausgebildet ist.

13. Schweißeinrichtung (1) nach einem der Ansprüche 8 bis 12, **dadurch gekennzeichnet, dass** die erste Elektrode (28; 68; 78) mit einem ersten Spulenende (85) einer Spule (84) verbunden ist und dass die zweite Elektrode (29; 69; 79) mit einem zweiten Spulenende (86) der Spule (84) verbunden ist, um mit der Spule (84) einen Schwingkreis zu bilden, und dass die Kapazität aus einer Schwingungsfrequenz des Schwingkreises ermittelt wird.

14. Schweißeinrichtung (1) nach einem der Ansprüche 8 bis 12, **dadurch gekennzeichnet, dass** die Kapazität aus einer Schwingungsfrequenz eines astabilen Multivibrators ermittelt wird oder dass die Schweißsteuerung (6) die elektrische Schweißenergie mit einer ersten Frequenz, vorzugsweise mit einer Frequenz von 50 Hertz, bereitstellt und dass die, insbesondere mit einem Hochpassfilter ausgerüstete, Messeinrichtung (7) die Kapazität zwischen der ersten Elektrode (28; 68; 78) und der zweiten Elektrode (29; 69; 79) mit einer zweiten Frequenz, vorzugsweise mit einer Frequenz größer 500 Hertz, ermittelt.

15. Schweißeinrichtung (1) nach einem der Ansprüche 8 bis 12, **dadurch gekennzeichnet, dass** die Messeinrichtung (7) mit einem, insbesondere der ersten Schweißschiene (4) zugeordneten, Sensor (26) verbunden ist, der für eine Ermittlung wenigstens eines Messwerts aus der Gruppe: Temperatur in der Schweißzone (10), Druck in der Schweißzone (10), Abstand der ersten Schweißschiene (4) von der zweiten Schweißschiene (5), ausgebildet ist.
